# FASCICULE DE BREVET EUROPEEN

(11) **EP 1 787 159 B1**
(45) Date de publication et mention de la délivrance du brevet: **02.05.2012**
(21) Numéro de dépôt: 05798587.1
(22) Date de dépôt: 26.08.2005
(51) Int. Cl.: G02C 7/10, G02C 7/16

(54) **Procédé de fabrication d'une ébauche pour la réalisation d'un écran de protection pour lunettes de sport et ébauche obtenue**
Verfahren zur Erzeugung eines Rohlings für die Herstellung eines Schutzschirmes für Sportbrillen, und erzeugter Rohling
Method for creating a blank for producing a protective screen for sports glasses, and obtained blank

(30) Priorité: 31.08.2004 FR 0409200
(43) Date de publication de la demande: 23.05.2007
(73) Titulaire: Christian Dalloz Sunoptics S.A.S, 39200 Saint-Claude (FR)
(72) Inventeur: DUMANGE, Isabelle, F-39200 Saint Claude (FR); MONTALBANO, Franck, Veyziat F-01100 Oyonnax (FR); BILLARD, Etienne, F-39200 Saint Claude (FR)
(74) Mandataire: Nithardt, Roland
(86) Numéro de dépôt international: PCT/FR2005/002148
(87) Numéro de publication internationale: WO 2006/027465

(56) Documents cités:
- FR-A- 2 517 838
- FR-A- 2 754 757
- FR-A- 2 785 059
- US-A- 2 427 918
- US-A- 2 472 731
- US-A- 4 859 048

## Description

### Domaine technique:

La présente invention concerne un procédé de fabrication d'une ébauche pour la réalisation d'un écran de protection pour lunettes de sport en une matière thermoplastique transparente teintée et l'ébauche obtenue par ledit procédé.

### Technique antérieure :

Actuellement, les écrans de protection des lunettes de sport sont fabriqués à partir de plaques extrudées et laminées en un matériau synthétique tel que par exemple un polycarbonate transparent, teinté dans la masse. Les fabricants de ces plaques fournissent les assembleurs de lunettes de sport en leur offrant une gamme standard de plaques colorées à partir desquelles ils découpent les écrans et leur font subir divers traitements de finition avant de les mettre en place sur une monture constituée d'un cadre et de branches appropriées.

Cette manière de procéder présente de très nombreux inconvénients qui se répercutent tant sur la qualité et l'esthétique du produit fini, que sur l'étendue de l'offre commerciale limitée en terme de choix de coloris exclusivement liés aux gammes de couleurs proposées par les fabricants des plaques.

De plus, la qualité optique des écrans de protection pour lunettes de sport est médiocre. En effet, les écrans fabriqués à partir de plaques laminées ont une épaisseur constante sur toute leur section et ne peuvent donc effectuer aucune correction susceptible de compenser certaines aberrations dues notamment à la courbure donnée à ces écrans en fonction de la monture sur laquelle ils sont fixés.

Par ailleurs, les fabricants de ces plaques proposent des coloris en fonction de la mode du moment, qui évolue et change constamment. L'adaptation des fabricants à la mode très changeante se fait avec un certain retard préjudiciable à la bonne marche des affaires sur ce marché très dynamique qui nécessite une réactivité immédiate. De plus, les créateurs et les stylistes ont souvent des exigences spécifiques qui ne s'accommodent pas avec l'offre limitée proposée par les fabricants de plaques. En outre, les fabricants de plaques exigent de leurs clients l'achat de quantités importantes de plaques dans chaque coloris sélectionné. De ce fait, les clients sont dans l'obligation de constituer des stocks importants, qu'ils risquent de ne pas être en mesure d'écouler à cause du caractère éphémère de la mode.

Une solution divulguée dans la publication US-A-4,859,048 consiste à réaliser par moulage un écran de protection sous la forme d'un secteur cylindrique, cet écran de protection ayant une épaisseur décroissante de sa zone médiane vers ses bords latéraux pour éliminer les aberrations optiques. Néanmoins, cette forme d'écran de protection cylindrique n'est pas satisfaisante en termes de design et de mode, et ne correspond pas aux formes des montures actuelles.

Une autre solution décrite dans la publication FR-A-2.785.060 concerne un écran de protection réalisé à partir d'une ébauche plane moulée, découpée puis cintrée pour être montée dans une monture. Cette ébauche plane présente également une épaisseur décroissante de sa zone médiane vers ses bords latéraux pour éviter les aberrations optiques. Néanmoins, aucune précision n'est donnée quant au procédé de fabrication d'une telle ébauche.

### Exposé de l'invention :

Le but de l'invention est de pallier les inconvénients énumérés ci-dessus relatifs aux écrans de protection pour lunettes de sport actuels et de supprimer les difficultés économiques induites par les procédés de fabrication de ces écrans de protection habituellement mis en oeuvre.

Ce but est atteint par le procédé tel que défini en préambule, caractérisé en ce que l'on réalise ladite ébauche par injection de ladite matière thermoplastique transparente teintée dans un moule d'injection comportant une cavité agencée pour constituer une plaque, dont on tirera ledit écran après découpage d'une forme déterminée, et une zone d'injection dont l'entrée communique avec un point d'injection et dont la sortie communique avec ladite cavité par un seuil d'injection, cette zone d'injection étant agencée pour constituer un talon d'injection amovible attaché à ladite plaque, le rapport de la longueur dudit seuil d'injection et de la longueur de ladite plaque étant compris entre 15 et 100% et de préférence entre 30 et 80%.

Dans une forme de réalisation préférée, on utilise une cavité ayant une épaisseur comprise entre 0,50 mm et 1,50 mm et de préférence entre 0,80 mm et 0,95 mm au moins dans sa partie médiane sensiblement.

Selon le type d'ébauche à réaliser, on utilise une cavité pouvant avoir des faces sensiblement parallèles ou non, de sorte que son épaisseur soit sensiblement constante ou par exemple décroissante de sa partie médiane vers ses bords latéraux. De même, on peut utiliser une cavité ayant une forme générale plane, au moins partiellement incurvée, voire cylindrique ou sphérique, ou quelconque.

De manière avantageuse, on utilise un moule dont la distance entre le point d'injection de la zone d'injection et le bord le plus éloigné de la cavité soit comprise entre 100 et 200 mm.

Selon le type d'ébauche à réaliser, on prévoit la zone d'injection à l'extérieur ou à l'intérieur de la cavité, le seuil d'injection pouvant avoir une forme sensiblement rectiligne ou courbe.

Le but est également atteint par l'ébauche telle que définie en préambule, caractérisée en ce qu'elle comporte une plaque agencée pour former ledit écran après découpage d'une forme déterminée et un talon d'injection amovible attaché à ladite plaque par un seuil d'injection, le rapport de la longueur du seuil d'injection et de la longueur de cette plaque étant sensiblement compris entre 15 et 100% et de préférence entre 30 et 80%.

Dans une forme de réalisation préférée, l'épaisseur de la plaque est sensiblement comprise entre 0,50 mm et 1,50 mm et de préférence entre 0,80 mm et 0,95 mm au moins dans sa partie médiane.

Cette plaque peut avoir des faces sensiblement parallèles ou non, son épaisseur étant sensiblement constante ou par exemple décroissante de sa partie médiane vers ses bords latéraux. Elle peut également présenter une forme générale plane, au moins partiellement incurvée, voire cylindrique ou sphérique, ou quelconque.

De manière avantageuse, la distance entre le point d'injection et le bord le plus éloigné de la plaque est comprise entre 100 et 200 mm.

Selon le type d'écran de protection à réaliser, le talon d'injection peut être situé à l'extérieur ou à l'intérieur de ladite plaque, le seuil d'injection étant sensiblement rectiligne ou courbe.

### Description sommaire des dessins :

La présente invention et ses avantages seront mieux compris à la lecture de la description détaillée d'une mise en oeuvre préférée du procédé de l'invention, en référence aux dessins annexés donnés à titre indicatif et non limitatif, dans lesquels :
- les figures 1 et 2 sont des vues en plan de deux types d'ébauche obtenus selon le procédé de fabrication de l'invention, et
- les figures 3 à 8 sont des vues en coupe longitudinale de plusieurs formes d'ébauche selon invention.

Le procédé selon l'invention permet de réaliser des écrans de protection pour lunettes de sport qui répondent aux exigences les plus extrêmes des concepteurs et des utilisateurs. A cet effet, le procédé permet à l'assembleur de se libérer des contraintes imposées par les fabricants de plaques de base teintées proposées en catalogue et se propose de réaliser des ébauches moulées par injection.

La matière première se présente sous la forme de granulés auxquels on ajoute des additifs ou des substances complémentaires telles que par exemple des absorbeurs de rayonnements ultraviolets. De telles substances, par exemple le benzotriazol, se présentent sous forme de poudre qui est mélangée aux granulés de polycarbonate ou de polyamide. Ces absorbeurs doivent avoir une efficacité suffisante pour absorber les rayonnements ultraviolets à 100%.

Pour l'obtention d'une teinte « personnalisée », on rajoute aux granulés de matière première des pigments colorés ou des mélanges de pigments colorés dont les formules de mélanges sont variables à l'infini. La matière première, ses additifs et ses pigments colorés, étant utilisés pour la fabrication d'ébauches moulées par injection, il est envisageable de produire de très petites séries et de répondre ainsi de façon rapide et complète aux demandes des créateurs en fonction d'une mode éphémère ou pour lancer un produit original en série limitée.

Enfin, la technique du moulage par injection s'impose également du fait qu'il permet de produire des ébauches dont la forme est adaptée pour corriger les aberrations optiques. Avec les plaques standard utilisées actuellement, qui sont en fait assimilables à des lames à faces parallèles, aucune correction n'est possible. En plus, les écrans de protection sont généralement fortement incurvés sur les cotés au moment du montage des lunettes, c'est-à-dire lors de l'assemblage de l'écran de protection sur sa monture. Les courbures latérales ont pour effet d'augmenter les aberrations optiques et il n'existe aucun moyen de les corriger. Grâce au moulage, il est possible de donner une forme spécifique aux ébauches, notamment de prévoir une épaisseur de l'écran de protection supérieure dans sa partie centrale par rapport à celle de ses parties latérales. Cette différence d'épaisseur permet de corriger certaines aberrations optiques induites ou amplifiées lors de la mise en forme de l'écran de protection.

Etant donné la faible épaisseur de ces écrans de protection, les techniques de moulage classiques de pièces en matière thermoplastique ne sont pas adaptées. En effet, le moulage d'ébauches ayant une épaisseur dans leur zone médiane comprise par exemple entre 0,50 mm et 1,50 mm et de préférence voisine de 0,95 mm et une épaisseur dans leurs zones latérales par exemple comprise entre 0,50 mm et 1 mm et de préférence voisine de 0,85 mm ne peut pas être effectué dans un moule classique avec des points d'injection centraux. Un moule classique ne permettrait pas d'obtenir la qualité de surface requise et l'injection par une entrée centrale induirait des tensions susceptibles de modifier à la fois les caractéristiques mécaniques et la qualité optique de l'écran. Le moule utilisé doit avoir des qualités de surface du type poli optique, pour que ses parois aient un coefficient de frottement aussi faible que possible et opposent un minimum de résistance à l'écoulement de la matière. Les parois du moule peuvent être traitées par application d'un revêtement dur, par exemple de titane ou similaire par une technique de dépôt en phase vapeur ou similaire.

### Illustrations de l'invention et meilleure manière de la réaliser :

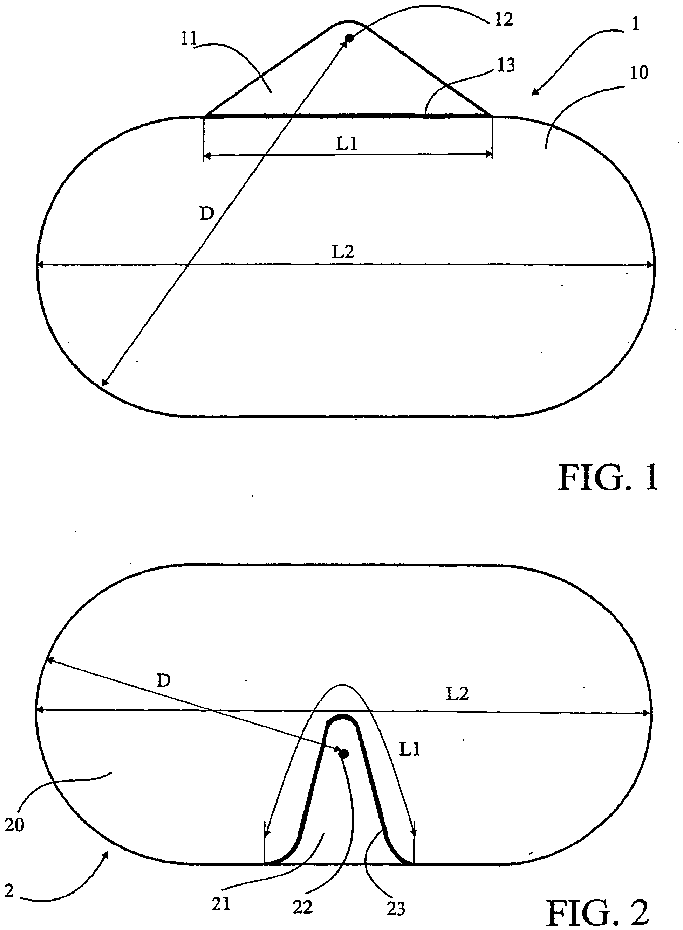

En plus des qualités mécaniques du moule, l'injection de la matière doit s'effectuer en nappe. Pour ce faire, le moule comporte d'une part une cavité agencée pour former une plaque 10, 20 dont on tirera l'écran de protection après découpage d'une forme déterminée et d'autre part une zone d'injection prévue soit à l'extérieur, soit à l'intérieur de la cavité, pour former après moulage un talon d'injection 11, 21 amovible attaché à la plaque 10, 20. La pièce moulée obtenue comprenant la plaque 10, 20 et le talon d'injection 11, 21 forme l'ébauche 1 ou 2 telle qu'illustrée par la figure 1 ou 2. La zone d'injection, qui représente la partie fonctionnelle de l'injection, comporte une entrée communiquant avec un point d'injection 12, 22, par lequel arrive la matière injectée sous pression, et une sortie communiquant avec la cavité par un seuil d'injection 13, 23, par lequel s'écoule la matière injectée sous pression en nappe. On retrouve le point d'injection 12, 22 et le seuil d'injection 13, 23 sur le talon d'injection 11, 21. Compte tenu de la température de la matière injectée et de la pression avec laquelle cette matière est injectée, la zone d'injection a une épaisseur supérieure à celle de la cavité et communique avec elle par le seuil d'injection sur une longueur L1 suffisante pour permettre l'écoulement de la matière injectée en nappe jusqu'au bord le plus éloigné de la cavité. Le rapport de la longueur L1 du seuil d'injection 13, 23, qu'il soit rectiligne ou courbe, et de la longueur L2 de la cavité ou de l'ébauche 10, 20 est compris entre 15 et 100% et de préférence entre 30 et 80%. De même, la distance D entre le point d'injection 12, 22 et le bord le plus éloigné de la cavité ou de l'ébauche 10, 20 est comprise entre 100 et 200 mm.

L'ébauche 1 de la figure 1 comporte une plaque 10 de forme sensiblement ovale s'inscrivant dans un rectangle. Son talon d'injection 11, de forme sensiblement triangulaire, est extérieur et relié à la plaque 10 par la base du rectangle formant un seuil d'injection 13 rectiligne. La différence d'épaisseur entre le talon d'injection 11 et la plaque 10 crée une zone de rupture qui facilite le retrait du talon d'injection 11.

Dans la figure 2, l'ébauche 2 est sensiblement similaire à l'ébauche 1. La différence réside dans son talon d'injection 21 qui est intérieur à la plaque 20 et relié à elle par un seuil d'injection 23 de forme courbe. La longueur L1 du seuil d'injection 23 correspond bien entendu à sa longueur développée. Cette forme courbe ménagée dans la plaque 20 après le retrait du talon d'injection 21 permet de marquer l'emplacement du nez dans l'écran de protection pour lunette.

Bien entendu, d'autres formes d'ébauche peuvent être envisagées, le talon d'injection pouvant être extérieur, intérieur, voire à cheval sur un des bords de la plaque, selon le résultat recherché.

Selon le type d'écran de protection à réaliser et les caractéristiques optiques visées, la cavité du moule peut avoir deux faces parallèles planes ou courbes, une face plane et une face bombée ou deux faces bombées ayant des courbures différentes ou encore des formes plus complexes, incurvées par exemple. Selon sa géométrie, elle peut avoir une épaisseur sensiblement constante ou non et par exemple décroissante de sa partie médiane vers ses bords latéraux.

### Possibilités d'application industrielle :

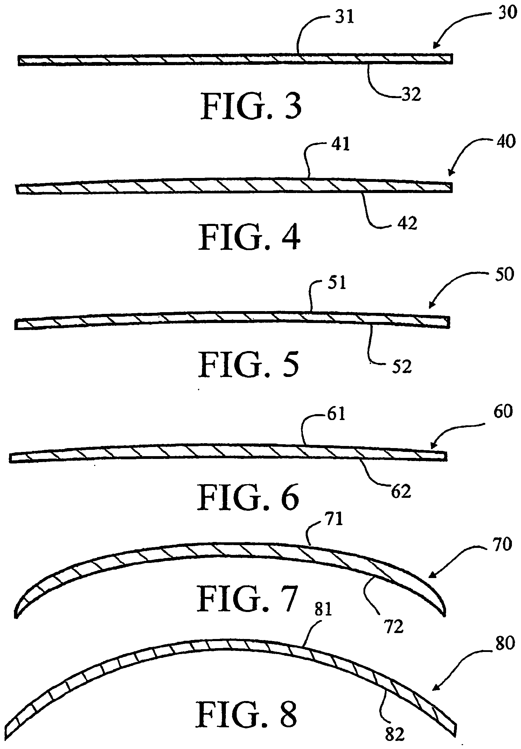

Les figures 3 à 8 illustrent schématiquement et en coupe longitudinale quelques exemples de formes d'ébauche ou de plaque 30-80 qu'il est possible de réaliser par le procédé de moulage selon l'invention. Bien entendu, ces plaques 30-80 comportent un bord périphérique (non représenté), ou similaire, permettant de les monter dans une monture de lunettes.

La plaque 30 de la figure 3 comporte deux faces 31, 32 planes et parallèles, son épaisseur étant constante de sa partie centrale à ses bords. La plaque 50 de la figure 5 est sensiblement similaire à celle de la figure 3 et s'en différencie par ses deux faces 51, 52 parallèles et courbes.

La plaque 40 de la figure 4 comporte une face plane 41 et une face bombée 42. L'épaisseur dans la partie centrale est sensiblement supérieure à celle des bords latéraux.

La plaque 60 de la figure 6 comporte une première face bombée 61 et une seconde face bombée 62. Les profils des deux faces sont différents de telle manière que l'épaisseur au centre est supérieure à celle des zones latérales proches des bords. Les faces 61, 62 de cette plaque 60 peuvent être des secteurs circulaires. Dans ce cas, les rayons de courbure respectifs sont différents, les centres de courbure pouvant être superposés ou décalés.

Les plaques 70 et 80 respectivement des figures 7 et 8 ont une forme plus complexe. Alors que les plaques précédentes 30 à 60 sont destinées à former des écrans de protection pour lunettes de sport qui seront incurvés au moment de leur montage dans une monture, les plaques 70 et 80 ont une forme incurvée adaptée à la forme de la monture obtenue directement par moulage. Ces formes incurvées peuvent être quelconques, formées de rayons de courbure variables d'un bord à l'autre de la plaque comme dans la plaque 70, ou au contraire géométriques, par exemple cylindrique ou sphérique, formées d'un rayon de courbure constant d'un bord à l'autre de la plaque comme dans la plaque 80. De même, les faces 71, 72 et 81, 82 de chaque plaque 70, 80 peuvent être parallèles ou non avec des centres de courbure superposés ou décalés. Cette solution évite d'induire des tensions susceptibles d'altérer les qualités optiques de l'écran ou de réduire ses caractéristiques de résistance aux chocs lors d'un montage par pliage des zones latérales.

Il apparaît clairement que le procédé selon l'invention permet de réaliser par moulage des plaques dont la géométrie peut être adaptée à tout type de monture sans limite de forme.

Après moulage, les ébauches ou les plaques sont traitées pour que les écrans aient des caractéristiques anti-rayonnement, anti-buée, photochromiques, polarisantes par exemple. Ces traitements s'effectuent habituellement par application de substances composées d'une solution ou d'une suspension de pigments ou de poudres dans un solvant approprié. Les poudres ou pigments sont par exemple des polymères. La solution ou la suspension est appliquée par trempage, par pulvérisation ou similaire et la fixation des poudres ou des pigments s'effectue par exemple par polymérisation. Cette polymérisation peut se faire par air chaud, par rayonnement infrarouge ou ultraviolet ou similaire.

Le procédé mis en oeuvre pour la réalisation d'écrans de protection pour lunettes de sport permet de répondre aux exigences les plus diverses, notamment de satisfaire aux normes internationales imposées à ces produits, mais également aux souhaits des créateurs concepteurs et enfin des utilisateurs. Ces exigences peuvent concerner les qualités optiques, les caractéristiques mécaniques ainsi que les propriétés esthétiques.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Procédé de fabrication d'une ébauche (1, 2) pour la réalisation d'un écran de protection pour lunettes de sport en une matière thermoplastique transparente teintée, **caractérisé en ce que** l'on réalise ladite ébauche par injection de ladite matière thermoplastique transparente teintée dans un moule d'injection comportant une cavité agencée pour constituer une plaque (10-80), dont on tirera ledit écran après découpage d'une forme déterminée, et une zone d'injection dont l'entrée communique avec un point d'injection (12, 22) et dont la sortie communique avec ladite cavité par un seuil d'injection (13, 23), cette zone d'injection étant agencée pour constituer un talon d'injection (11, 21) amovible attaché à ladite plaque (10-80), le rapport de la longueur (L1) dudit seuil d'injection (13, 23) et de la longueur (L2) de ladite plaque (10-80) étant compris entre 15 et 100% et de préférence entre 30 et 80%.

2. Procédé selon la revendication 1, **caractérisé en ce que** l'on utilise une cavité ayant une épaisseur sensiblement comprise entre 0,50 mm et 1,50 mm et de préférence entre 0,80 mm et 0,95 mm au moins dans sa partie médiane.

3. Procédé selon la revendication 1, **caractérisé en ce que** l'on utilise une cavité ayant des faces sensiblement parallèles de sorte que son épaisseur soit sensiblement constante.

4. Procédé selon la revendication 1, **caractérisé en ce que** l'on utilise une cavité ayant des faces non parallèles de sorte que son épaisseur soit décroissante de sa partie médiane vers ses bords latéraux.

5. Procédé selon la revendication 1, **caractérisé en ce que** l'on utilise une cavité ayant une forme générale plane.

6. Procédé selon la revendication 1, **caractérisé en ce que** l'on utilise une cavité ayant une forme générale au moins partiellement incurvée.

7. Procédé selon la revendication 1, **caractérisé en ce que** l'on utilise un moule dont la distance (D) entre le point d'injection (12, 22) de la zone d'injection (11, 21) et le bord le plus éloigné de la cavité soit comprise entre 100 et 200 mm.

8. Procédé selon la revendication 1, **caractérisé en ce que** l'on prévoit une zone d'injection à l'extérieur de la cavité et reliée à elle par un seuil d'injection (13) sensiblement rectiligne.

9. Procédé selon la revendication 1, **caractérisé en ce que** l'on prévoit une zone d'injection à l'intérieur de la cavité et reliée à elle par un seuil d'injection (23) de forme courbe.

10. Ebauche (1, 2) pour la réalisation d'un écran de protection pour lunettes de sport en une matière thermoplastique transparente teintée selon le procédé de l'une quelconque des revendications 1 à 9, **caractérisée en ce qu'**elle comporte une plaque (10-80) agencée pour former ledit écran de protection après découpage d'une forme déterminée et un talon d'injection (11, 21) amovible pourvu d'un point d'injection (12, 22) et attaché à ladite plaque (10-80) par un seuil d'injection (13, 23), le rapport de la longueur (L1) dudit seuil d'injection (13, 23) et de la longueur (L2) de ladite plaque (10-80) étant sensiblement compris entre 15 et 100% et de préférence entre 30 et 80%.

11. Ebauche selon la revendication 10, **caractérisée en ce que** l'épaisseur de ladite plaque (10-80) est sensiblement comprise entre 0,50 mm et 1,50 mm et de préférence entre 0,80 mm et 0,95 mm au moins dans sa partie médiane.

12. Ebauche selon la revendication 10, **caractérisée en ce que** ladite plaque (30, 50, 80) a des faces (31, 32 ; 51, 52 ; 81, 82) sensiblement parallèles de sorte que son épaisseur soit sensiblement constante.

13. Ebauche selon la revendication 10, **caractérisée en ce que** ladite plaque (40, 60, 70) a des faces non parallèles de sorte que son épaisseur soit décroissante de sa partie médiane vers ses bords latéraux.

14. Ebauche selon la revendication 10, **caractérisée en ce que** ladite plaque (30) a une forme générale plane.

15. Ebauche selon la revendication 10, **caractérisée en ce que** ladite plaque (40-80) a une forme générale au moins partiellement incurvée.

16. Ebauche selon la revendication 10, **caractérisée en ce que** la distance (D) entre ledit point d'injection (12, 22) et le bord le plus éloigné de ladite plaque (10-80) est comprise entre 100 et 200 mm.

17. Ebauche selon la revendication 10, **caractérisée en ce que** ledit talon d'injection (11) est situé à l'extérieur de ladite plaque (10) et ledit seuil d'injection (13) est sensiblement rectiligne.

18. Ebauche selon la revendication 10, **caractérisée en ce que** ledit talon d'injection (21) est situé à l'intérieur de ladite plaque (20) et **en ce que** ledit seuil d'injection (23) a une forme courbe.

## Claims

1. Method for creating a blank (1, 2) for producing a protective screen for sports glasses out of a tinted transparent thermoplastic material, **characterized in that** one produces said blank by injection of said tinted transparent thermoplastic material in an injection mould comprising a cavity arranged to form a plate (10-80) from which said screen will be obtained after cutting out a determined shape, and an injection area whose inlet communicates with an injection point (12, 22) and whose outlet communicates with said cavity through a gate (13, 23), this injection area being arranged so as to form a removable runner (11, 21) attached to said plate (10-80), the ratio between the length (L1) of said gate (13, 23) and the length (L2) of said plate (10-80) being comprised between 15 and 100% and preferably between 30 and 80%.

2. Method according to claim 1, **characterized in that** one uses a cavity having a thickness substantially comprised between 0.50 mm and 1.50 mm and preferably between 0.80 mm and 0.95 mm, at least in its middle part.

3. Method according to claim 1, **characterized in that** one uses a cavity having substantially parallel faces, so that its thickness is substantially constant.

4. Method according to claim 1, **characterized in that** one uses a cavity having non parallel faces, so that its thickness decreases from its middle part towards its side edges.

5. Method according to claim 1, **characterized in that** one uses a cavity having an even general shape.

6. Method according to claim 1, **characterized in that** one uses a cavity having an at least partly curved general shape.

7. Method according to claim 1, **characterized in that** one uses a mould whose distance (D) between the injection point (12, 22) of the injection area (11, 21) and the most remote edge of the cavity is comprised between 100 and 200 mm.

8. Method according to claim 1, **characterized in that** one provides an injection area outside of the cavity and connected to it by an substantially rectilinear gate (13).

9. Method according to claim 1, **characterized in that** one provides an injection area inside of the cavity and connected to it by a gate (23) having a curved shape.

10. Blank (1, 2) for producing a protective screen for sports glasses out of a tinted transparent thermoplastic material according to the method of any of claims 1 to 9, **characterized in that** it comprises a plate (10-80) arranged to form said protective screen after cutting out a determined shape and a removable runner (11, 21) provided with an injection point (12, 22) and attached to said plate (10-80) by a gate (13, 23), the ratio between the length (L1) of said gate (13, 23) and the length (L2) of said plate (10-80) being substantially comprised between 15 and 100% and preferably between 30 and 80%.

11. Blank according to claim 10, **characterized in that** the thickness of said plate (10-80) is substantially comprised between 0.50 mm and 1.50 mm and preferably between 0.80 mm and 0.95 mm, at least in its middle part.

12. Blank according to claim 10, **characterized in that** said plate (30, 50, 80) has substantially parallel faces (31, 32; 51, 52; 81, 82), so that its thickness is substantially constant.

13. Blank according to claim 10, **characterized in that** said plate (40, 60, 70) has non parallel faces, so that its thickness decreases from its middle part towards its side edges.

14. Blank according to claim 10, **characterized in that** said plate (30) has an even general shape.

15. Blank according to claim 10, **characterized in that** said plate (40-80) has an at least partly curved general shape.

16. Blank according to claim 10, **characterized in that** the distance (D) between said injection point (12, 22) and the most remote edge of said plate (10-80) is comprised between 100 and 200 mm.

17. Blank according to claim 10, **characterized in that** said runner (11) is located outside of said plate (10) and **in that** said gate (13) is substantially rectilinear.

18. Blank according to claim 10, **characterized in that** said runner (21) is located inside of said plate (20) and **in that** said gate (23) has a curved shape.

## Patentansprüche

1. Verfahren zur Erzeugung eines Rohlings (1, 2) für die Herstellung eines Schutzschirms für Sportbrillen aus einem gefärbten durchsichtigen thermoplastischen Material, **dadurch gekennzeichnet, dass** man den besagten Rohling durch Einspritzen des besagten gefärbten durchsichtigen thermoplastischen Materials in eine Spritzgussform herstellt, die einen Hohlraum beträgt, der angeordnet ist, um eine Platte (10-80) zu bilden, aus der man nach Ausschneiden einer festgelegten Form den besagten Schirm gewinnen wird, sowie einen Einspritz-Bereich, dessen Einlass mit einem Einspritz-Punkt (12, 22) in Verbindung ist, und dessen Auslass über einen Anschnitt (13, 23) mit dem besagten Hohlraum in Verbindung ist, wobei dieser Einspritz-Bereich angeordnet ist, um einen entfernbaren, mit der besagten Platte (10, 80) verbundenen Anguss (11, 21) zu bilden, wobei das Verhältnis zwischen der Länge (L1) des besagten Anschnitts (13, 23) und der Länge (L2) der besagten Platte (10-80) zwischen 15 und 100%, und vorzugsweise zwischen 30 und 80% liegt.

2. Verfahren nach Anspruch 1, **dadurch gekennzeichnet, dass** man einen Hohlraum verwendet, dessen Dicke zumindest in seinem mittleren Teil merklich zwischen 0,50 mm und 1,50 mm, und vorzugsweise zwischen 0,80 mm und 0,95 mm liegt.

3. Verfahren nach Anspruch 1, **dadurch gekennzeichnet, dass** man einen Hohlraum verwendet, der merklich parallele Seiten aufweist, so dass seine Dicke merklich konstant ist.

4. Verfahren nach Anspruch 1, **dadurch gekennzeichnet, dass** man einen Hohlraum verwendet, der nicht parallele Seiten aufweist, so dass seine Dicke von seinem mittleren Bereich zu seinen Seitenrändern abnimmt.

5. Verfahren nach Anspruch 1, **dadurch gekennzeichnet, dass** man einen Hohlraum verwendet, der eine ebene allgemeine Form aufweist.

6. Verfahren nach Anspruch 1, **dadurch gekennzeichnet, dass** man einen Hohlraum verwendet, der eine zumindest zum Teil gewölbte allgemeine Form aufweist.

7. Verfahren nach Anspruch 1, **dadurch gekennzeichnet, dass** man eine Spritzgussform verwendet, deren Abstand (D) zwischen dem Einspritzpunkt (12, 22) des Einspritz-Bereichs (11, 21) und dem entferntesten Rand des Hohlraums zwischen 100 und 200 mm liegt.

8. Verfahren nach Anspruch 1, **dadurch gekennzeichnet, dass** man einen Einspritz-Bereich vorsieht, der außerhalb des Hohlraums liegt und über einen merklich geradlinigen Anschnitt (13) mit diesem verbunden ist.

9. Verfahren nach Anspruch 1, **dadurch gekennzeichnet, dass** man einen Einspritz-Bereich vorsieht, der innerhalb des Hohlraums liegt und über einen bogenförmigen Anschnitt (23) mit diesem verbunden ist.

10. Rohling (1, 2) für die Herstellung eines Schutzschirms für Sportbrillen aus einem durchsichtigen gefärbten thermoplastischen Material nach dem Verfahren eines beliebigen der Ansprüche 1 bis 9, **dadurch gekennzeichnet, dass** er eine Platte (10-80) beträgt, die ausgelegt ist, um nach dem Ausschneiden einer festgelegten Form den besagten Schutzschirm zu bilden, sowie einen entfernbaren, mit einem Einspritz-Punkt (12, 22) versehenen und über einen Anschnitt (13, 23) mit der besagten Platte 10-80) verbundenen Anguss (11, 21), wobei das Verhältnis zwischen der Länge (L1) des besagten Anschnitts (13, 23) und der Länge (L2) der besagten Platte (10-80) merklich zwischen 15 und 100%, und vorzugsweise zwischen 30 und 80% liegt.

11. Rohling Nach Anspruch 10, **dadurch gekennzeichnet, dass** die Dicke der besagten Platte (10-80) zumindest in ihrem mittleren Teil merklich zwischen 0,50 mm und 1,50 mm, und vorzugsweise zwischen 0,80 mm und 0,95 mm liegt.

12. Rohling nach Anspruch 10, **dadurch gekennzeichnet, dass** die besagte Platte (30, 50, 80) merklich parallele Seiten (31, 32 ; 51, 52 ; 81, 82) aufweist, so dass ihre Dicke merklich konstant ist.

13. Rohling nach Anspruch 10, **dadurch gekennzeichnet, dass** die besagte Platte (40, 60, 70) nicht parallele Seiten aufweist, so dass ihre Dicke von ihrem mittleren Bereich zu ihren Seitenrändern abnimmt.

14. Rohling nach Anspruch 10, **dadurch gekennzeichnet, dass** die besagte Platte (30) eine ebene allgemeine Form aufweist.

15. Rohling nach Anspruch 10, **dadurch gekennzeichnet, dass** die besagte Platte (40-80) eine mindestens zum Teil gewölbte allgemeine Form aufweist.

16. Rohling nach Anspruch 10, **dadurch gekennzeichnet, dass** der Abstand (D) zwischen dem besagten Einspritzpunkt (12, 22) und dem entferntesten Rand der besagten Platte (10-80) zwischen 100 und 200 mm liegt.

17. Rohling nach Anspruch 10, **dadurch gekennzeichnet, dass** der besagte Anguss (11) sich außerhalb der besagten Platte (10) befindet und dadurch, dass der besagte Anschnitt (13) merklich geradlinig ist.

18. Rohling nach Anspruch 10, **dadurch gekennzeichnet, dass** der besagte Anguss (21) sich innerhalb der besagten Platte (20) befindet und dadurch, dass der besagte Anschnitt (23) bogenförmig ist.
